# EUROPEAN PATENT SPECIFICATION

(11) **EP 2 258 916 B1**
(45) Date of publication and mention of the grant of the patent: **29.08.2012**
(21) Application number: 10163175.2
(22) Date of filing: 18.05.2010
(51) Int. Cl.: E06B 3/70, E04C 2/38, E04C 2/36, B32B 3/12, B32B 37/14

(54) **Device for making light building boards having a frame and honeycomb core**
Vorrichtung zur Herstellung von Leichtbauplatten mit Rahmen und Wabenkern
Dispositif pour la fabrication d'un panneau léger avec une structure de cadre et un noyau alvéolaire

(30) Priority: 18.05.2009 IT MO20090129
(43) Date of publication of application: 08.12.2010
(73) Proprietor: Process S.R.L., 41049 Sassuolo (IT)
(72) Inventor: Mescoli, Giancarlo, 41049 Sassuolo (MO) (IT)
(74) Representative: Crugnola, Pietro

(56) References cited:
- EP-A1- 1 652 662
- WO-A1-2005/077654
- DE-A1- 2 423 845
- US-A- 3 877 132

## Description

The present invention relates to an apparatus for making hollow core panels, for example hollow core panels of doors or wing doors of furniture.

From the prior art making hollow core panels for doors or wing doors of furniture by assembling a frame of said panel and fixing a filling material to said frame, for example a honeycomb filling material such as honeycomb cardboard is known.

The filling material is fixed to the frame by mechanical fixing means, for example by seaming. This type of fixing nevertheless has the drawback of being able to damage the frame of the panel. The seaming operation further requires a considerable waste of time, which affects productivity and is difficult to automate.

EP 1652662 A1 **discloses an apparatus as in the preamble of claim 1.** DE 2423845 A1 **discloses an arrangement of storage units containing longitudinal and transverse elements.**

The present invention proposes providing an apparatus for making hollow core panels, for doors or wing doors of furniture that enables said hollow core panels to be assembled in a simple, rapid and automated manner.

The object of the present invention is achieved with an apparatus according to the features of claim 1. **Other advantageous features are disclosed in the dependent claims.**

Owing to the invention it is possible to make hollow core panels for doors or wing doors of furniture in a simple, rapid and reliable manner, with high productivity and automatically.

Further features and advantages of the invention will be found in the description that follows that is given merely by way of non-limiting example, with reference to the attached drawings, in which:
Figure 1 is a plan view of an apparatus according to the invention;

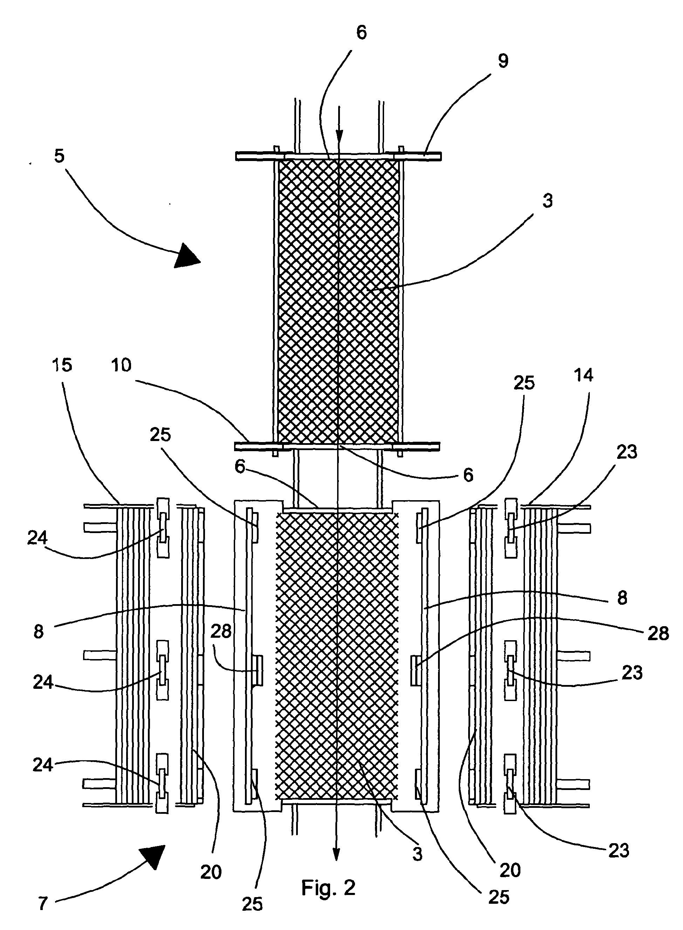

Figure 2 illustrates a first step of assembling a hollow core panel with the apparatus of Figure 1;

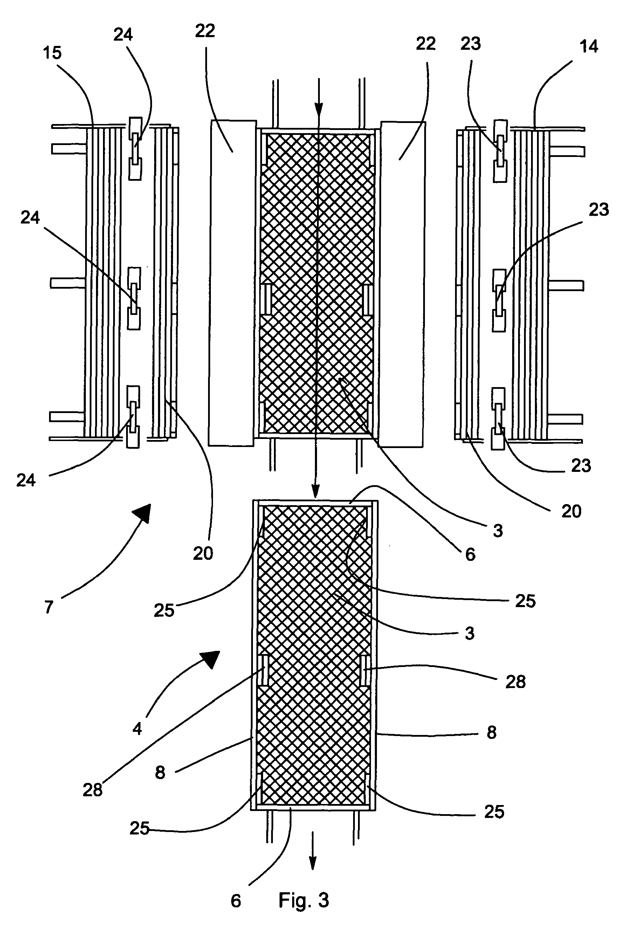

Figure 3 illustrates a second step of assembling a hollow core panel with the apparatus of Figure 2;

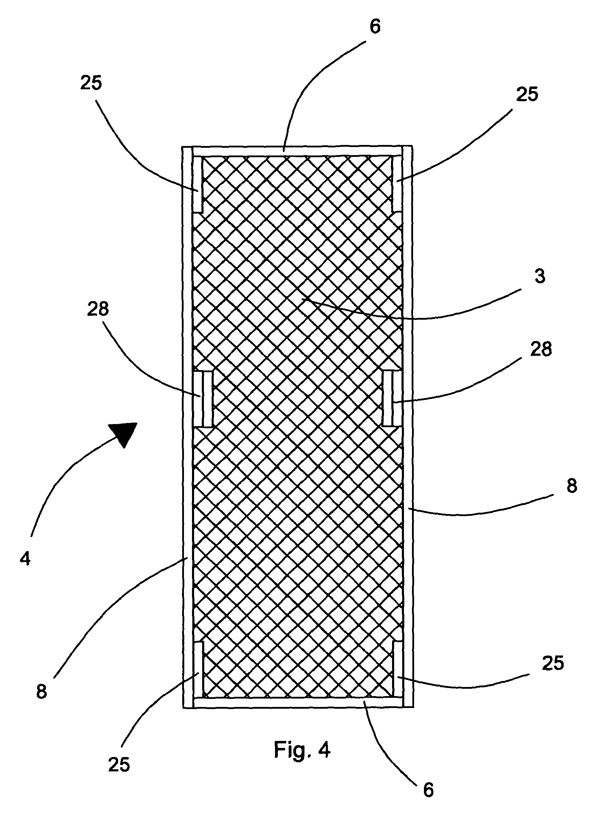

Figure 4 illustrates a hollow core panel assembled with the apparatus of Figure 1;

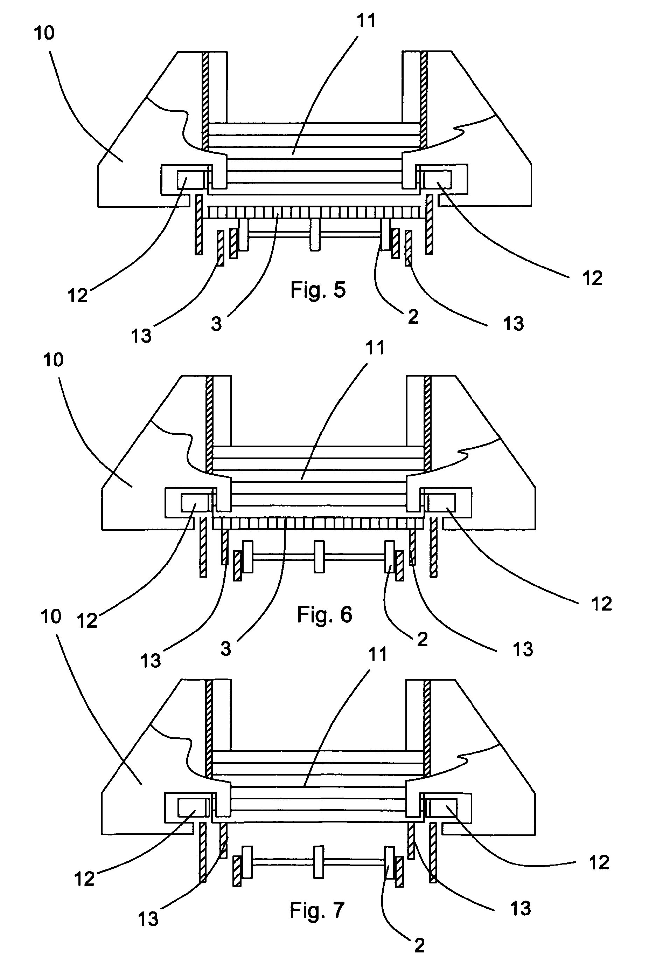

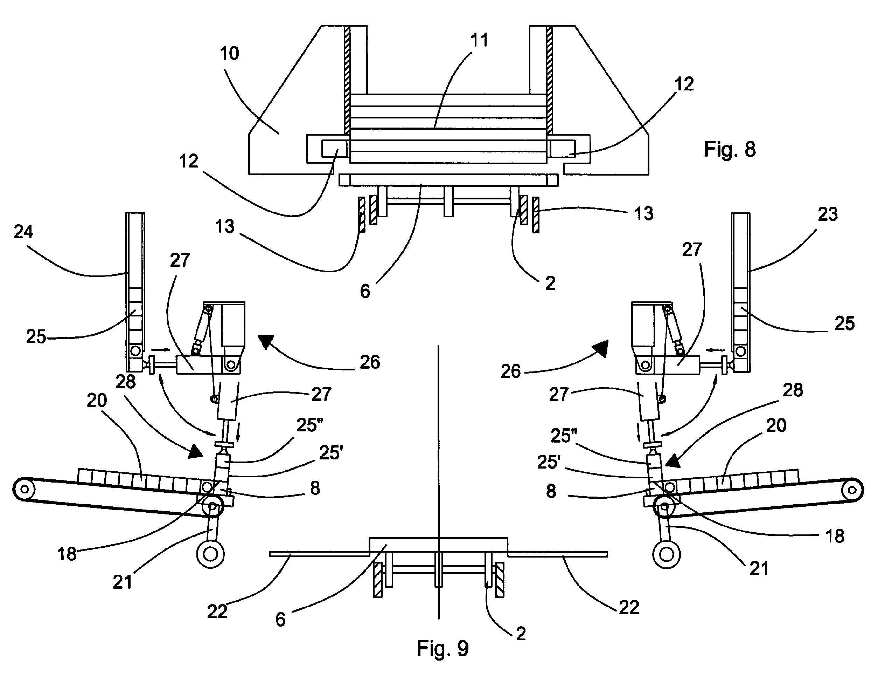

Figures 5, 6, 7 and 8 are schematic cross sections of Figure 1 that illustrate a first step of assembling a hollow core panel;

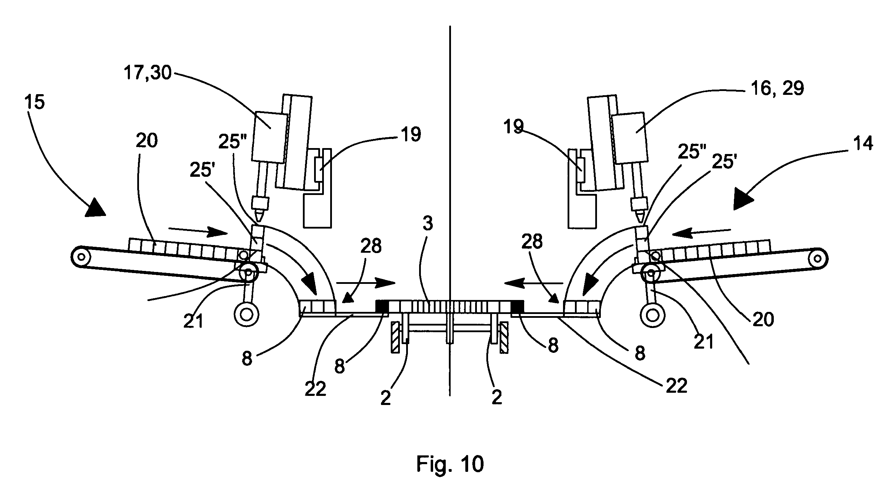

Figures 9 and 10 are further schematic cross sections of the apparatus in Figure 1 that illustrate a second step of assembling a hollow core panel.

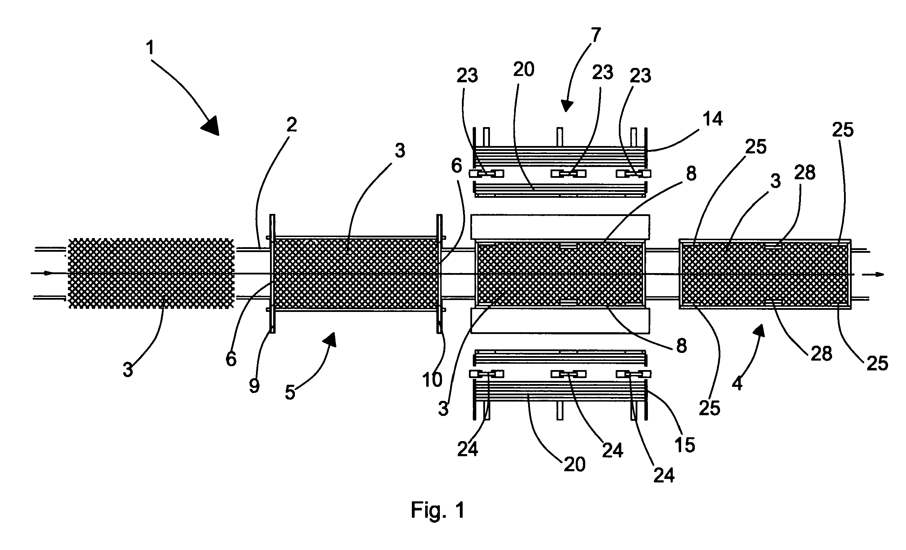

With reference to Figure 1, 1 indicates an apparatus according to the invention that comprises a conveying device 2, for example a chain conveying device, on which honeycomb elements 3 are conveyed that come from a first conveying line (that is not shown) that is intended to constitute the core of a hollow core panel 4 for doors or wing doors of furniture. The apparatus 1 according to the invention further comprises a first assembly station 5 in which two transverse elements 6 of a frame of the hollow core panel 4 and a second assembly station 7 are connected to a honeycomb element 3, in which second assembly station 7, on another pair of opposite sides of the honeycomb element 3, two longitudinal elements 8 of the frame of the hollow panel are connected to complete the frame.

In the first assembly station 5 a first storage unit 9 and a second storage unit 10 are provided, in each of which a stack 11 of said transverse elements 6 is contained. The first storage unit 9 and the second storage unit 10 are arranged above the conveying device 2 in a direction that is transverse to the advancing direction of the conveying device 2.

The stack 11 of transverse elements 6 is supported by a pair of pressing elements 12 that exert pressure on the ends of the transverse elements 6 located in the lower part of the stack 11.

When a honeycomb element 3, conveyed by the conveying device 2, reaches the first storage unit 9 and the second storage unit 10 the conveying device 2 stops and the honeycomb element 3 is lifted by a lifting device consisting, for example, of a pair of rods 13 that are vertically movable, that are arranged parallel to the advancing direction of the conveying device 2. The rods 13 move upwards until they come into contact with the lower face of the honeycomb element 3, lifting the honeycomb element 3 from the conveying device 2 and they lift further until they come into contact with the transverse elements 6 that are located on the bottom of the stacks 11 of transverse elements 6 in the first storage unit 9 and in the second storage unit 10 so as to act as supports for said stacks 11. At this point, the pressing elements 12 are removed from the stacks 11, which are now supported by the rods 13 and the first storage unit 9 moves towards the second storage unit 10 in the advancing direction of the conveyor 2 until the transverse elements 6 located on the bottom of the stacks 11 exert light pressure on the corresponding sides of the honeycomb element 3. At this point, the rods 13 move downwards until they come to deposit the honeycomb element 3 on the conveyor, together with the two transverse elements 6 that were located on the bottom of the stacks 11 and the pressing elements 12 are activated again to support the stacks 11 in the first storage unit 9 and in the second storage unit 10 and to enable the honeycomb element 3 with the two transverse elements 6 resting on the transverse sides thereof to be conveyed from the conveyor 2 to the second assembly station 7.

The second assembly station 7 comprises a first group of three storage units 23 and a second group of three storage units 24, each of which contains a plurality of inserts 25 that are intended to be fixed to the ends and to the centre of the longitudinal elements 8 to constitute reinforcing elements that are suitable for enabling hinges to be mounted at the ends of the longitudinal elements 8, and of a handle and of a lock, in the centre of the longitudinal elements 8. The inserts 25 are fixed to both the longitudinal elements 8 of a hollow core panel 4 so as to enable the hinges and the handle and the lock to be mounted indifferently on the right or left side of the hollow core panel 4.

The three storage units of the first group of storage units 23 are aligned parallel to a first side of the conveying device 2 and the three storage units of the second group of storage units 24 are aligned parallel to a second side of the conveying device 2, opposite said first side.

With each storage unit 23, 24 a removing device 26 is associated that comprises a gripping element 27, for example a suction cup gripping element, by means of which the removing device 26 removes the inserts 25 from the respective storage unit 23, 24 to deposit the inserts 25 on a longitudinal element 8. To the ends of each longitudinal element 8 a single reinforcing insert 25 is fixed, whilst in a substantially central position of the longitudinal element 8, where a handle and a lock are intended to be fixed, a pair 28 of superimposed reinforcing inserts 25' and 25" is fixed. The second assembly station comprises a third storage unit 14 and a fourth storage unit 15 that are arranged on opposite sides of the conveying device 2, each of which contains a plurality of longitudinal elements 8 of a frame of a hollow core panel 4, the longitudinal elements 8 being arranged alongside one another, parallel to the advancing direction of the conveying device 2 to form a row 20 of longitudinal elements 8.

With the first group of storage units 23 and with the third storage unit 14 a first and a second applying device 16, 29 are associated. The first applying device 16 is intended to apply a first adhesive substance to the longitudinal elements 8 contained in the third storage unit 14, to fix thereupon inserts 25, and on the first insert 25' of the pair of inserts 28, to fix thereupon the second insert 25" of the pair of inserts 28. The second applying device 29 is intended to apply a second adhesive substance to the longitudinal elements 8, to the inserts 25 fixed to the ends of the longitudinal elements 8 and to the pair of inserts 28 to fix the longitudinal elements 8 to the honeycomb element 3. With the second group of storage units 24 and with the fourth storage unit 15 a third applying device 17 and a fourth applying device 30 are associated that have respectively the same function as the first applying device 16 and the second applying device 29. The applying devices 16, 29, 17, 30 are movable along respective longitudinal guides 19 that are parallel to the advancing direction of the conveying device 2.

The longitudinal elements 8 are arranged, both in the third storage unit 14 and in the fourth storage unit 15, with one face 18 thereof, intended to receive the reinforcing inserts 25, facing upwards.

When the honeycomb element 3 coming from the first assembly station 5 reaches the second assembly station 7, the first applying device 16 and the third applying device 17 move along respective longitudinal guides 19 and apply a strip of adhesive substance to the ends and in a central zone of said face 18 of the first longitudinal element 8 contained in each storage unit 14, 15, i.e. the element of the respective row 20 that is nearer the conveying device 2. After said first adhesive substance has been applied, the removing devices 26 remove from the first group of storage units 23 and from the second group of storage units 24 three reinforcing inserts 25 and apply the three reinforcing inserts 25 to the zones of the respective longitudinal elements 8 to which the first adhesive substance was applied, exerting pressure thereupon for a preset time, depending on the adhesive substance used, that is sufficient to ensure the adhesion of the reinforcing elements 25 to the longitudinal elements 8. Subsequently, the first applying device 16 and the third applying device 17 apply said first adhesive substance to the reinforcing insert 25' fixed in a central position on the respective longitudinal element 8 and from the central storage unit of the first group of storage units 23 and of the second group of storage units 24 a respective further reinforcing insert 25" is removed that is applied to said reinforcing insert 25' and is maintained pressed thereupon for a preset time that is sufficient to ensure that the further reinforcing insert 25" adheres to the reinforcing insert 25' to constitute the pair 28 of reinforcing inserts to which a handle and a lock are intended to be applied.

After fixing of the reinforcing inserts 25 to the longitudinal elements 8 has been terminated, the second applying device 29 and the fourth applying device 30 apply a second adhesive substance to said face 18 of the longitudinal elements 8, to the end reinforcing inserts 25 and to the pair 28 of central reinforcing inserts. Lastly, the longitudinal elements 8 are overturned by a respective overturning device 21 until they rest on a respective shelf 22 that is adjacent to the conveying device 2, such as to have said face 18, the end reinforcing inserts 25 and the pair 28 of central reinforcing inserts facing the honeycomb element 3.

Subsequently, each longitudinal element 8 is pushed by a respective pushing element (not shown) against a respective side of the honeycomb element 3 and against the ends of the transverse elements 6 associated with the honeycomb element 3 and is then kept pressed against the honeycomb element 3 and the ends of the transverse elements 6 for a preset time, depending on the nature of the adhesive substance used that is sufficient for ensuring adhesion of the longitudinal element 8 to the honeycomb element 3 and to the transverse elements 6 so as to obtain a frame with a honeycomb element 3 inside, to the opposite faces of which, for example, two sheets of plywood will be applied to complete the hollow core panel 4. The hollow core panel 4 is then removed from the second assembly station 7 and delivered, by the conveying device 2, to a second conveying line that removes the hollow core panel 4 from the apparatus 1.

The conveying device 2 is preferably movable vertically to facilitate the removal of the honeycomb elements 3 from the first conveying line and to facilitate the delivering of the honeycomb elements 3 to the second conveying line.

## Claims

1. Apparatus (1) for making hollow core panels (4), said hollow core panels (4) comprising a frame consisting of two transverse elements (6) and two longitudinal elements (8), inside which a honeycomb element (3) is fixed, **said apparatus comprising a conveying device (2) for moving said honeycomb element (3) in said apparatus (1), characterised by** the fact that it comprises a first assembly station (5) in which said **two** transverse elements (6) can be associated with said honeycomb element (3), a second assembly station (7) in which said **two** longitudinal elements can be fixed to said honeycomb element (3) and to said transverse elements (6) , wherein said first assembly station (5) comprises a first storage unit (9) and a second storage unit (10), in each of which a stack (11) of said transverse elements (6) is contained, said first storage unit (9) and said second storage unit (10) being arranged above said conveying device (2) transversely to an advancing direction of said conveying device (2).

2. Apparatus (1) according to claim **1**, wherein said first storage unit (9) and said second storage unit (10) each comprise a pair of pressing elements (12) that are suitable for exerting a pressure on the ends of the transverse elements (6) located on the bottom of the respective stack (11) to support said stack (11).

3. Apparatus (1) according to any preceding claim, wherein said first assembly station (5) comprises a lifting device consisting of two longitudinal rods (13) that are vertically movable, that are arranged parallel to the advancing direction of said conveying device (2).

4. Apparatus (1) according to any preceding claim, wherein said second assembly station (7) comprises a first group (23) of three storage units that are aligned parallel to a first side of said conveying device (2) and a second group (24) of three storage units that are aligned parallel to a second side of said conveying device (2) opposite said first side, each of said storage units (23, 24) containing a plurality of reinforcing inserts (25) intended for being fixed to end zones and to a central zone of a face (18) of said longitudinal elements (8).

5. Apparatus (1) according to any preceding claim, wherein said second assembly station (7) comprises a third storage unit (14) and a fourth storage unit (15) in each of which a row (20) of said longitudinal elements (8) is contained.

6. Apparatus (1) according to claim **5**, wherein with said first group (23) of storage units there is associated a first applying device (16) for applying a first adhesive substance and with said third storage unit (14) there is associated a second applying device (29) for applying a second adhesive substance.

7. Device according to claim **6**, wherein with said second group of storage units (24) there is associated a third applying device (17) for applying said first adhesive substance, and with said fourth storage unit (15) there is associated a fourth applying device (30) for applying said second adhesive substance.

8. Apparatus (1) according to any one of claims **4 to 7**, wherein with said first group of storage units (23) and with said second group of storage units (24) respective removing devices (26) are associated that are suitable for removing said reinforcing inserts (25) from the respective storage units (23, 24) and depositing said reinforcing inserts (25) on said longitudinal elements (8).

9. Apparatus (1) according to claim **8**, wherein said removing devices comprise gripping elements (27) for said reinforcing inserts.

10. Apparatus according to claim **9**, wherein said gripping elements (27) are suction cup gripping elements.

11. Apparatus (1) according to any one of claims **6 to 10**, wherein said first and second applying device (16, 29) and said third and fourth applying device (17, 30) are movable parallel to the advancing direction of said conveying device (2) along respective longitudinal guides (19).

12. Apparatus (1) according to any one of claims **5 to 11** wherein with said third storage unit (14) and with said fourth storage unit (15) respective overturning devices (21) are associated that are suitable for overturning said longitudinal elements (8) on respective shelves (22) arranged laterally to said conveying device (2) so that said face (18) with said reinforcing inserts (25) faces said conveying device (2).

13. Apparatus (1) according to claim **12**, wherein said second assembly station (7) comprises a pair of pushing devices suitable for pushing said longitudinal elements (8) along said shelves (22) until they bring said longitudinal elements (8) into contact with said honeycomb element (2) and said transverse elements (6) and exert a pressure on said longitudinal elements (8) after they have come into contact with said honeycomb element (3) and said transverse elements (6).

14. Apparatus (1) according to any preceding claims, wherein said conveying device (2) is vertically movable.

## Patentansprüche

1. Vorrichtung (1) zum Herstellen von Hohlkernpaneelen (4), wobei die Hohlkernpaneele (4) einen Rahmen aufweisen, der aus zwei Transversalelementen (6) und zwei Longitudinalelementen (8) besteht, innerhalb von denen ein Wabenelement (3) fixiert ist, wobei die Vorrichtung eine Vortriebseinrichtung (2) zum Bewegen des Wabenelements (3) in der Vorrichtung (1) aufweist, **gekennzeichnet durch** die Tatsache, dass sie eine erste Zusammenbaustation (5) aufweist, in der die zwei Transversalelemente (6) dem Wabenelement (3) zugeordnet werden können, einer zweiten Zusammenbaustation (7), in der die zwei Longitudinalelemente (8) an dem Wabenelement (3) und dem Transversalelement (6) fixiert werden können, wobei die erste Zusammenbaustation (5) eine erste Speichereinheit (9) und eine zweite Speichereinheit (10) aufweist, in denen jeweils ein Stapel (11) der Transversalelemente (6) enthalten ist, wobei die erste Speichereinheit (9) und die zweite Speichereinheit (10) über der Vortriebseinrichtung (2) transversal zu einer Vortriebsrichtung der Vortriebseinrichtung (2) angeordnet sind.

2. Vorrichtung (1) nach Anspruch 1, wobei die erste Speichereinheit (9) und die zweite Speichereinheit (10) jeweils ein Paar von Druckelementen (12) aufweisen, die dazu geeignet sind, einen Druck auf die Enden der Transversalelemente (6) auszuüben, die an dem Boden des entsprechenden Stapels (11) angeordnet sind, um den Stapel (11) zu stützen.

3. Vorrichtung (1) nach einem der voranstehenden Ansprüche, wobei die erste Zusammenbaustation (5) eine Hebeeinrichtung aufweist, die aus zwei Longitudinalstäben (13) besteht, die vertikal bewegbar sind und die parallel zu der Vortriebsrichtung der Vortriebseinrichtung (2) angeordnet sind.

4. Vorrichtung (1) nach einem der voranstehenden Ansprüche, wobei die zweite Zusammenbaustation (7) eine erste Gruppe (23) von drei Speichereinheiten aufweist, die parallel zu einer ersten Seite der Vortriebseinrichtung (2) ausgerichtet sind, und eine zweite Gruppe (24) von drei Speichereinheiten aufweist, die parallel zu einer zweiten Seite der Vortriebseinrichtung (2) gegenüber der ersten Seite angeordnet sind, wobei jede der Speichereinheiten (23, 24) eine Mehrzahl von Verstärkungseinsätzen (25) enthält, die dazu vorgesehen sind, an Endzonen und an einer Zentralzone einer Fläche (18) der Longitudinalelemente (8) fixiert zu werden.

5. Vorrichtung (1) nach einem der voranstehenden Ansprüche, wobei die zweite Zusammenbaustation (7) eine dritte Speichereinheit (14) und eine vierte Speichereinheit (15) aufweist, wobei in jeder davon eine Reihe (20) der Longitudinalelemente (8) enthalten ist.

6. Vorrichtung (1) nach Anspruch 5, wobei der ersten Gruppe (23) von Speichereinheiten eine erste Beaufschlagungseinrichtung (16) zum Beaufschlagen einer ersten Klebstoffsubstanz zugeordnet ist und der dritten Speichereinheit (14) eine zweite Beaufschlagungseinrichtung (29) zum Beaufschlagen einer zweiten Klebstoffsubstanz zugeordnet ist.

7. Vorrichtung nach Anspruch 6, wobei der zweiten Gruppe von Speichereinheiten (24) eine dritte Beaufschlagungseinrichtung (17) zum Beaufschlagen der ersten Klebstoffsubstanz zugeordnet ist, und wobei der vierten Speichereinheit (15) eine vierte Beaufschlagungseinrichtung (30) zum Beaufschlagen der zweiten Klebstoffsubstanz zugeordnet ist.

8. Vorrichtung (1) nach einem der Ansprüche 4 bis 7, wobei der ersten Gruppe von Speichereinheiten (23) und der zweiten Gruppe von Speichereinheiten (24) jeweilige Entfernungseinrichtungen (26) zugeordnet sind, die dazu geeignet sind, die Verstärkungseinsätze (25) von den jeweiligen Speichereinheiten (23, 24) zu entfernen und die Verstärkungseinsätze (25) an den Longitudinalelementen (8) abzulegen.

9. Vorrichtung (1) nach Anspruch 8, wobei die Entfernungseinrichtungen Greifelemente (27) für die Verstärkungseinsätze aufweisen.

10. Vorrichtung nach Anspruch 9, wobei die Greifelemente (27) Saugkopfgreifelemente sind.

11. Vorrichtung (1) nach einem der Ansprüche 6 bis 10, wobei die erste und die zweite Beaufschlagungseinrichtung (16, 29) und die dritte und die vierte Beaufschlagungseinrichtung (17, 30) parallel zu der Vortriebsrichtung der Vortriebseinrichtung (2) entlang jeweiliger Longitudinalführungen (19) bewegbar sind.

12. Vorrichtung (1) nach einem der Ansprüche 5 bis 11, wobei der dritten Speichereinheit (14) und der vierten Speichereinheit (15) jeweilige Umkippeinrichtungen (21) zugeordnet sind, die dazu geeignet sind, die Longitudinalelemente (8) auf jeweilige Ablageflächen (22) umzukippen, die lateral zu der Vortriebseinrichtung (2) angeordnet sind, so dass die Fläche (18) mit den Verstärkungseinsätzen (25) zu der Vortriebseinrichtung (2) weist.

13. Vorrichtung (1) nach Anspruch 12, wobei die zweite Zusammenbaustation (7) ein Paar von Schiebeeinrichtungen aufweist, die dazu geeignet sind, die Longitudinalelemente (8) entlang der Ablageflächen (22) zu schieben, bis sie die Longitudinalelemente (8) in Kontakt mit dem Wabenelement (2) und den Transversalelementen (6) bringen und einen Druck auf die Longitudinalelemente (8) ausüben, nachdem sie in Kontakt mit dem Wabenelement (3) und den Transversalelementen (6) gekommen sind.

14. Vorrichtung (1) nach einem der voranstehenden Ansprüche, wobei die Vortriebseinrichtung (2) vertikal bewegbar ist.

## Revendications

1. Dispositif (1) pour la réalisation de panneaux (4) à âme creuse, lesdits panneaux (4) à âme creuse comprenant un cadre se composant de deux éléments transversaux (6) et de deux éléments longitudinaux (8), à l'intérieur duquel est fixé un élément (3) en nid d'abeilles, ledit dispositif comprenant un dispositif transporteur (2) pour déplacer ledit élément (3) en nid d'abeilles dans ledit dispositif (1), ***caractérisé en ce qu'***il comprend un premier poste d'assemblage (5) dans lequel lesdits deux éléments transversaux (6) peuvent être associés audit élément (3) en nid d'abeilles, un deuxième poste d'assemblage (7) dans lequel lesdits deux éléments longitudinaux (8) peuvent être fixés audit élément (3) en nid d'abeilles et auxdits éléments transversaux (6), dans lequel ledit premier poste d'assemblage (5) comprend une première unité de stockage (9) et une deuxième unité de stockage (10), dans chacune desquelles est contenue une pile (11) desdits éléments transversaux (6), ladite première unité de stockage (9) et ladite deuxième unité de stockage (10) étant disposées au-dessus du dispositif transporteur (2), transversalement à une direction de progression dudit dispositif transporteur (2).

2. Dispositif (1) selon la revendication 1, dans lequel ladite première unité de stockage (9) et ladite deuxième unité de stockage (10) comprennent chacune une paire d'éléments presseurs (12) qui sont aptes à exercer une pression sur les extrémités des éléments transversaux (6) situés sur le fond de la pile (11) respective pour soutenir ladite pile (11).

3. Dispositif (1) selon l'une quelconque des revendications précédentes, dans lequel ledit premier poste d'assemblage (5) comprend un dispositif élévateur constitué de deux tiges longitudinales (13) qui sont mobiles verticalement, qui sont disposées parallèlement à la direction de progression dudit dispositif transporteur (2).

4. Dispositif (1) selon l'une quelconque des revendications précédentes, dans lequel ledit deuxième poste d'assemblage (7) comprend un premier groupe (23) de trois unités de stockage qui sont alignées parallèlement à un premier côté dudit dispositif transporteur (2) et un deuxième groupe (24) de trois unités de stockage qui sont alignées parallèlement à un deuxième côté dudit dispositif transporteur (2) opposé audit premier côté, chacune desdites unités de stockage (23, 24) contenant une pluralité d'inserts (25) de renforcement destinés à être fixés à des zones d'extrémité et à une zone centrale d'une face (18) desdits éléments longitudinaux (8).

5. Dispositif (1) selon l'une quelconque des revendications précédentes, dans lequel ledit deuxième poste d'assemblage (7) comprend une troisième unité de stockage (14) et une quatrième unité de stockage (15) dans chacune desquelles est contenue une rangée (20) desdits éléments longitudinaux (8).

6. Dispositif (1) selon la revendication 5, dans lequel, audit premier groupe (23) d'unités de stockage est associé un premier dispositif applicateur (16) pour appliquer une première substance adhésive, et à ladite troisième unité de stockage (14) est associé un deuxième dispositif applicateur (29) pour appliquer une deuxième substance adhésive.

7. Dispositif (1) selon la revendication 6, dans lequel, audit deuxième groupe d'unités de stockage (24) est associé un troisième dispositif applicateur (17) pour appliquer ladite première substance adhésive, et à ladite quatrième unité de stockage (15) est associé un quatrième dispositif applicateur (30) pour appliquer ladite deuxième substance adhésive.

8. Dispositif (1) selon l'une quelconque des revendications 4 à 7, dans lequel, audit premier groupe d'unités de stockage (23) et audit deuxième groupe d'unités de stockage (24) sont associés des dispositifs (26) de retrait qui sont aptes à retirer lesdits inserts (25) de renforcement des unités de stockage respectives (23, 24) et à déposer lesdits inserts (25) de renforcement sur lesdits éléments longitudinaux (8).

9. Dispositif (1) selon la revendication 8, dans lequel lesdits dispositifs de retrait comprennent des éléments de préhension (27) pour lesdits inserts de renforcement.

10. Dispositif (1) selon la revendication 9, dans lequel lesdits éléments de préhension (27) sont des éléments de préhension à ventouse.

11. Dispositif (1) selon l'une quelconque des revendications 6 à 10, dans lequel lesdits premier et deuxième dispositifs applicateurs (16, 29) et lesdits troisième et quatrième dispositifs applicateurs (17, 30) sont mobiles parallèlement à la direction de progression dudit dispositif transporteur (2) le long de guides longitudinaux respectifs (19).

12. Dispositif (1) selon l'une quelconque des revendications 5 à 11, dans lequel à ladite troisième unité de stockage (14) et à ladite quatrième unité de stockage (15) sont associés des dispositifs retourneurs respectifs (21) qui sont aptes à retourner lesdits éléments longitudinaux (8) sur des rayonnages respectifs (22) disposés latéralement audit dispositif transporteur (2) de façon que ladite face (18) avec lesdits inserts de renforcement (25) soit face audit dispositif transporteur (2).

13. Dispositif (1) selon la revendication 12, dans lequel ledit deuxième poste d'assemblage (7) comprend une paire de dispositifs pousseurs aptes à pousser lesdits éléments longitudinaux (8) le long desdits rayonnages (22) jusqu'à ce qu'ils amènent lesdits éléments longitudinaux (8) en contact avec ledit élément (2) à nid d'abeilles et lesdits éléments transversaux (6) et exercent une pression sur lesdits éléments longitudinaux (8) après qu'ils soient venus en contact avec ledit élément (2) à nid d'abeilles et lesdits éléments transversaux (6).

14. Dispositif (1) selon l'une quelconque des revendications précédentes, dans lequel ledit dispositif transporteur (2) est mobile verticalement.
